# EUROPÄISCHE PATENTSCHRIFT

(11) **EP 1 767 473 B1**
(45) Veröffentlichungstag und Bekanntmachung des Hinweises auf die Patenterteilung: **25.06.2008**
(21) Anmeldenummer: 06017703.7
(22) Anmeldetag: 25.08.2006
(51) Int. Cl.: B65G 47/24, B65G 17/48, B05B 15/04

(54) **Vorrichtung zur Behandlung von Werkstücken, insbesondere von Fahrzeugrädern, insbesondere im Rahmen einer Pulverlackierung**
Device for handling workpieces, especially vehicle wheels, especially in powdercoating
Dispositif pour la traitement de pièces, en particulier des roues des véhicules, en particulier laquage par poudrage

(30) Priorität: 24.09.2005 DE 102005045818
(43) Veröffentlichungstag der Anmeldung: 28.03.2007
(73) Patentinhaber: EISENMANN Anlagenbau GmbH & Co. KG, 71032 Böblingen (DE)
(72) Erfinder: Nothum, Stefan, 71154 Nufringen (DE); Schönhardt, Klaus, 71154 Nufringen (DE)
(74) Vertreter: Ostertag, Ulrich

(56) Entgegenhaltungen:
- EP-A- 1 413 367
- DE-A1- 2 101 706
- DE-B1- 1 556 543

## Beschreibung

Die Erfindung betrifft eine Vorrichtung zur Behandlung von Werkstücken, insbesondere Fahrzeugrädern, insbesondere im Rahmen einer Pulverlackierung, mit einer Fördereinrichtung, welche die Werkstücke entlang eines Bewegungsweges durch die Vorrichtung führt, wobei die Fördereinrichtung einen Förderer umfasst und die Werkstücke auf spindelförmigen Elementen anordenbar sind, die an dem Förderer befestigt und um ihre eigene Achse drehbar sind.

Aus der DE 102 49 999 B3 ist eine Vorrichtung zum Absaugen bestimmter Flächenbereiche an bepulverten Fahrzeugrädern bekannt, die eine Fördereinrichtung, welche die Fahrzeugräder entlang eines Bewegungsweges durch die Vorrichtung führt, umfasst. Die Fahrzeugräder sind auf Spindeln auflegbar, die an einem Förderer der Fördereinrichtung befestigt und um ihre eigene Achse drehbar sind.

Zu Drehen von Spindeln dieser Art sind Drehstationen in Form von formschlüssigen Trieben, beispielsweise Kettentrieben, bekannt, bei denen die Spindeln jeweils eine Kettenradscheibe besitzen, die in eine Kette der Drehstation eintaucht. Das Eintauchen der Kettenrades in die Kette ist allerdings stark verschleißbehaftet. Außerdem führen harte Übergänge beim Eintauchen des Kettenrades in die Kette zu einer Stoßbelastung der Fördereinrichtung und der auf den Spindeln gelagerten Werkstücke, insbesondere der Fahrzeugräder. Ferner begrenzt der Eintauchvorgang der Kettenräder in die Kette realisierbare Spindeldrehzahlen auf kleine Werte zwischen 0 U/min bis etwa 35 U/min. Darüber hinaus sind solche Drehstationen wartungsintensiv, insbesondere ist eine Schmierung der Kette und der Austausch verschlissener Ketten regelmäßig erforderlich. Im Übrigen sind Drehrichtungs- oder Drehzahlwechsel, wenn überhaupt möglich, schwierig zu gestalten und aufwendig. Es sind hierfür mehrere einzelne Drehstationen mit eigenen Motoren und eine entsprechende Gestaltung der Übergangsbereiche erforderlich. In kritischen Einsatzbereichen, in denen beispielsweise Sonderschutzmaßnahmen in Bezug auf Gas- und/oder Staubexplosionen zur Anwendung kommen (Ex-Bereiche), ist dies nahezu unmöglich zu realisieren.

Aufgabe der vorliegenden Erfindung ist, eine Vorrichtung der eingangs genannten Art zu gestalten, bei der eine Beförderung und eine Drehung der Werkstücke technisch einfach und zuverlässig realisierbar ist.

Diese Aufgabe wird erfindungsgemäß dadurch gelöst, dass die Fördereinrichtung wenigstens ein Mittel zur Erzeugung eines sich räumlich und/oder zeitlich ändernden Magnetfelds aufweist, welches eine Kraft zum Drehen oder Anhalten der spindelförmigen Elemente bewirkt.

Erfindungsgemäß erfolgt also der Antrieb der Werkstücke zur Drehung, im Gegensatz zu den bekannten Antrieben, völlig berührungslos, insbesondere unter Beibehaltung wenigstens eines Luftspaltes zwischen dem Mittel zur Erzeugung des Magnetfelds und den spindelförmigen Elementen, mit Hilfe des sich ändernden Magnetfelds. Auf diese Weise erfolgt der Antrieb nahezu verschleißfrei, so dass auch der Wartungsaufwand außerordentlich gering ist. Im Übrigen sind Magnetfelder innerhalb weiter Grenzen beliebig steuer- und regelbar, so dass Drehrichtungswechsel und Drehzahländerungen problemlos ausführbar sind. Es ist so eine Aufteilung des Bewegungsweges in einzelne Funktionsbereiche, insbesondere in Beschleunigungs- und Verzögerungsstrecken, möglich. Außerdem sind weitaus größere Spindeldrehzahlen als beim Einsatz von formschlüssigen Trieben realisierbar. Im Übrigen kann sowohl das Einfahren der spindelförmigen Elemente in die Fördereinrichtung als auch ein Bereichswechsel sehr weich ablaufen, so dass die Fördereinrichtung und die Werkstücke keiner Stoßbelastungen ausgesetzt sind. Ferner ist der Einsatz in kritischen Bereichen, insbesondere Ex-Bereichen, problemloser als bei den bekannten Drehstationen, da es durch den berührungslosen Antrieb nicht zu Reibungshitze oder zu Funkenentwicklung durch aufeinanderstoßende Metallteile, beispielsweise Zahnräder auf Ketten, kommt. Des Weiteren ist das Material, aus denen die spindelförmigen Elemente gefertigt sind, in weiten Grenzen frei wählbar. Beispielsweise können auch weiche Materialien wie Aluminium, welche bei einem formschlüssigen Antrieb einem großen Verschleiß unterliegen würden, verwendet werden. Auch ist die räumliche Orientierung der Vorrichtung irrelevant, beispielsweise können der Bewegungsweg der Fördereinrichtung und die Drehachsen der spindelförmigen Elemente horizontal oder vertikal verlaufen.

Vorteilhafterweise kann das Magnetfeld die Form einer entlang des Bewegungsweges wandernden Welle haben. Auf diese Weise ist ein besonders sanfter, ruckfreier Antrieb für die Drehbewegung der spindelförmigen Elemente realisierbar.

Zweckmäßigerweise kann das Mittel entlang des Bewegungsweges eine Vielzahl von elektrischen Spulenelementen, insbesondere Elektromagneten, zum Erzeugen des Magnetfelds aufweisen. Diese sind einfach ansteuerbar und außerdem robust und wartungsfrei betreibbar.

Bei einer besonders vorteilhaften Ausführungsform können die elektrischen Spulenelemente in wenigstens zwei Gruppen untereinander verschaltet und wechselweise entlang des Bewegungsweges angeordnet sein, wobei die elektrischen Spulenelemente gruppenweise mit elektrischen Wechselströmen beaufschlagt sein können, die gegeneinander phasenverschoben sind. Auf diese Weise kann besonders einfach ein Magnetfeld in Form einer wandernden Welle erzeugt werden.

Um einen gleichmäßigen räumlichen Verlauf des Magnetfelds zu realisieren, können die elektrischen Spulenelemente äquidistant entlang des Förderers angeordnet sein.

Die elektrischen Spulenelemente können ein- oder beidseitig des Förderers angeordnet sein. Auf diese Weise sind unterschiedliche Leistungsklassen einfach realisierbar. Um kleine Magnetfelder und damit kleine Drehmomente, beispielsweise zum Drehen leichter Werkstücke, zu erzeugen genügt eine Anordnung elektrischer Spulenelemente auf einer Seite des Förderers. Größere Magnetfelder werden durch beidseitige Anordnung der elektrischen Spulenelemente ermöglicht.

Das Mittel zur Erzeugung des Magnetfelds kann mit einer Steuerungseinrichtung, insbesondere einem Frequenzumformer, steuerbar verbunden sein, mit der der zeitliche Verlauf und/oder die Stärke des Magnetfelds einfach veränderbar ist.

Zweckmäßigerweise kann das Mittel zur Erzeugung des Magnetfelds mit einer Drehstromquelle oder einer Quelle für geregelten Gleichstrom funktionell verbunden sein. Mit der Drehstromquelle beziehungsweise der Quelle für geregelten Gleichstrom kann mit geringem Steuer- und/oder Regelaufwand ein sich zeitlich änderndes Magnetfeld entsprechend dem Verlauf des Erregerstroms erzeugt werden.

Bei einer weiteren besonders vorteilhaften Ausführungsform können die spindelförmigen Elemente jeweils ein fest mit dem Förderer verbundenes Teil, insbesondere einen Spindelstock, und ein um dieses drehbar gelagertes Teil, insbesondere eine Spindelwelle, aufweisen. Der einfache Aufbau der spindelförmigen Elemente mit wenigen Bauteilen ermöglicht eine schnelle Montage mit einem geringen Justageaufwand und einen zuverlässigen, wartungsarmen Betrieb.

Vorteilhafterweise kann das drehbar gelagerte Teil, insbesondere die Spindelwelle, eine insbesondere kreisförmige Scheibe (Spindelscheibe), die wenigstens zu einem Teil aus einem elektrisch leitenden Material, insbesondere aus Metall, ist, aufweisen, die drehschlüssig an dem drehbar gelagerten Teil befestigt sein kann. Die Spindelscheibe kann insbesondere aus Stahl, Eisen, Aluminium, Kupfer oder einer Legierung sein. In der Spindelscheibe kann das sich ändernde Magnetfeld besonders gut Wirbelströme erzeugen.

Um eine gleichmäßige Drehung der spindelförmigen Elemente zu gewährleisten, kann die Spindelscheibe konzentrisch zur Spindeldrehachse und mit ihrer Scheibenebene senkrecht zur Spindeldrehachse angeordnet sein.

Je nach Größe des gewünschten Magnetfelds, kann das Mittel zur Erzeugung des Magnetfelds, insbesondere die elektrischen Spulenelemente, ein- oder beidseitig der kreisförmigen Spindelscheiben, angeordnet sein oder die Spindelscheiben hufeisenförmig umgreifen.

Der Förderer kann kontinuierlich oder getaktet laufen. Dies hat den Vorteil, dass die Vorrichtung für unterschiedliche, sowohl kontinuierlich als auch getaktet ablaufende Behandlungen, beispielsweise beim Einsatz von entlang des Bewegungsweges angeordneten Behandlungsstationen, einsetzbar ist. Die Steuerung des Mittels zur Erzeugung des Magnetfelds kann an die Steuerung des Förderers anpassbar sein, so dass auch bei gleichzeitiger translatorischer Beförderung der spindelförmigen Elemente entlang des Bewegungsweges diese zuverlässig und kontrolliert gedreht werden können.

Ausführungsbeispiele der Erfindung werden nachfolgend anhand der Zeichnung näher erläutert; es zeigen
- Figur 1: schematisch eine Draufsicht eines ersten Ausführungsbeispiels einer Fördereinrichtung einer Vorrichtung zur Behandlung von Fahrzeugrädern im Rahmen einer Pulverlackierung, mit Spindeln zum Auflegen der Fahrzeugräder, die an einer Endloslaschenkette eines Förderers befestigt und um ihre eigene Achse drehbar sind, und mit Elektromagneten mit hufeisenförmigen Kernen zur Erzeugung eines entlang eines Bewegungsweges sich ändernden Magnetfelds, welches eine Kraft zum Drehen oder Anhalten der Fahrzeugräder bewirkt;
- Figur 2: schematisch einen vertikalen Teilschnitt der Fördereinrichtung aus Figur 1 im Bereich einer der Spindeln und eines der Elektromagnete senkrecht zur Bewegungsrichtung;
- Figur 3: schematisch einen vertikalen Teilschnitt eines zweiten Ausführungsbeispiels einer der Fördereinrichtung der Figuren 1 und 2 ähnlichen Fördereinrichtung mit beidseitig der Spindeln angeordneten Elektromagneten mit hufeisenförmigen Kernen, hier im Bereich einer der Spindeln;
- Figur 4: schematisch einen vertikalen Teilschnitt eines dritten Ausführungsbeispiels einer der Fördereinrichtung der Figuren 1 und 2 ähnlichen Fördereinrichtung mit auf einer Seite der Spindeln angeordneten Elektromagneten mit geraden Kernen, hier im Bereich einer der Spindeln;
- Figur 5: schematisch einen vertikalen Teilschnitt eines vierten Ausführungsbeispiels einer der Fördereinrichtung der Figuren 1 und 2 ähnlichen Fördereinrichtung mit zwei auf einer Seite der Spindel paarweise angeordneten Elektromagneten mit geraden Kernen, hier im Bereich einer der Spindeln.

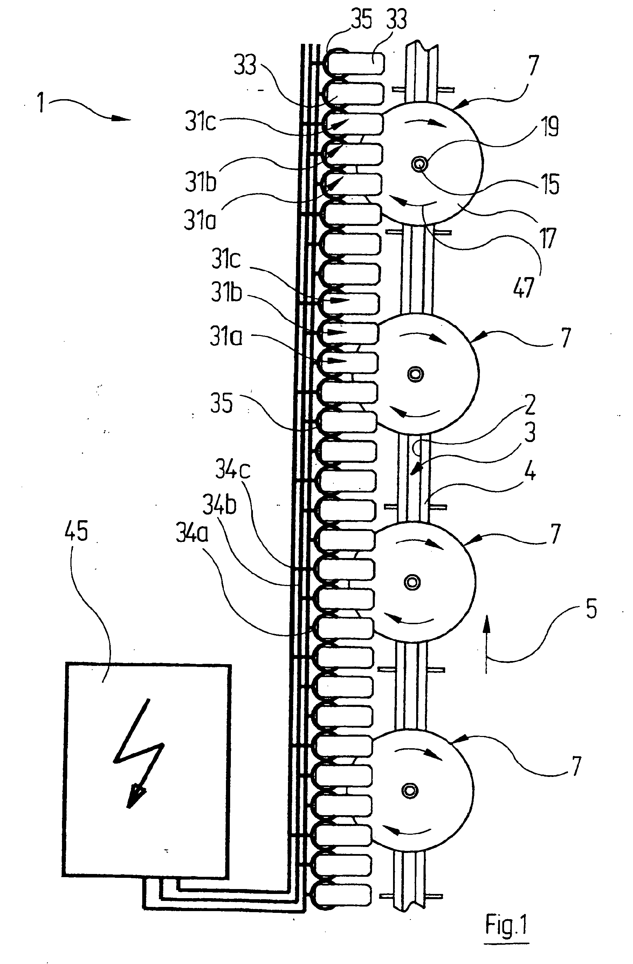

In Figur 1 ist schematisch eine Draufsicht eines ersten Ausführungsbeispiels einer insgesamt mit dem Bezugszeichen 1 versehenen Fördereinrichtung einer ansonsten nicht dargestellten Vorrichtung zur Behandlung von Fahrzeugrädern im Rahmen einer Pulverlackierung gezeigt. Die Fördereinrichtung 1 führt die Fahrzeugräder entlang eines Bewegungsweges durch die Vorrichtung.

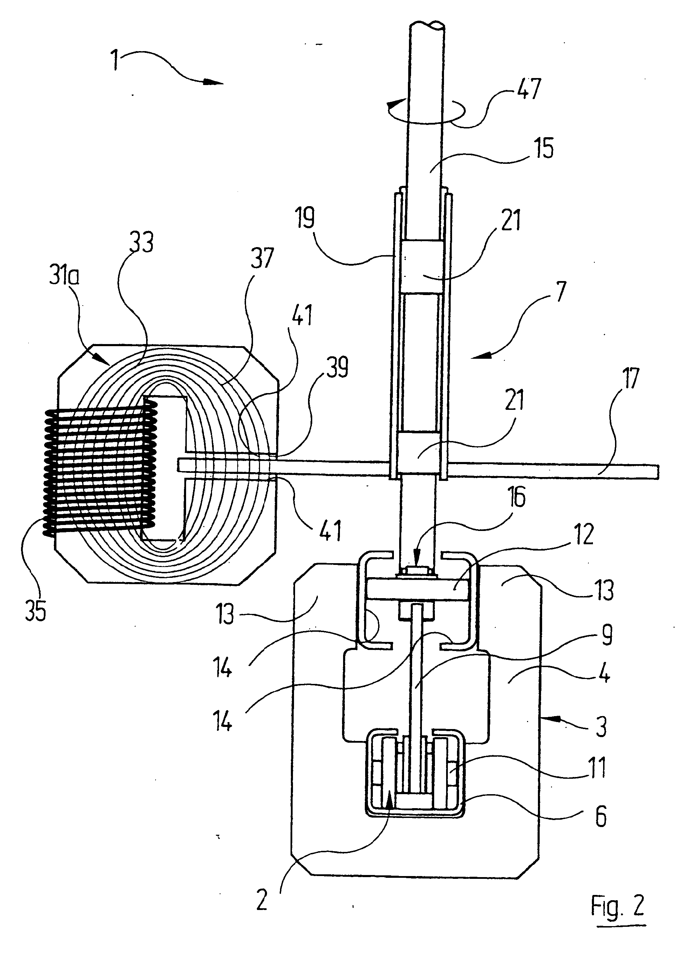

Die Fördereinrichtung 1 umfasst eine in Figur 1 vertikal verlaufende Endloslaschenkette 2 eines Förderers 3. Die Endloslaschenkette 2 ist in einem langgestreckten Spindelführungsgehäuse 4 untergebracht, von dem in Figur 1 lediglich ein Ausschnitt gezeigt ist, und das ein etwa C-förmiges, im seitlichen Teilschnitt in Figur 2 nach oben offenes, Profil hat. Das Spindelführungsgehäuse 4 weist an seinem Grund, in Figur 2 unten, eine nach oben offene Kettenführung 6 mit ebenfalls C-förmigem Profil auf, in der die Endloslaschenkette 2 geführt ist. Die Endloslaschenkette 2 ist über nicht dargestellte Antriebseinheiten in Richtung eines Pfeils 5 (Förderrichtung), in Figur 1 von unten nach oben, entlang des Bewegungsweges angetrieben.

An der Endloslaschenkette 2 ist eine Vielzahl von im Wesentlichen identischen Spindeln 7 zur Aufnahme der Fahrzeugräder befestigt, von denen eine beispielhaft im vertikalen Teilschnitt in Figur 2 dargestellt ist.

Die Spindeln 7 weisen jeweils einen kreiszylinderförmigen Spindelstock 9 auf, dessen Achse eine Spindeldrehachse bildet. Das in Figur 2 untere Ende des Spindelstocks 9 ist so an einem Bolzen 11 der Endloslaschenkette 2 befestigt, dass die Achse des Spindelstocks 9 senkrecht auf der Achse des Bolzens 11 steht. Das der Endloslaschenkette 2 abgewandte Ende des Spindelstocks 9 ist über eine Führungsrolle 12 in einer Doppel-C-Profilführung 14 geführt, welche zwischen den Schenkeln 13 des C-förmigen Spindelführungsgehäuses 4 fest fixiert ist.

Außerdem ist auf dem der Endloslaschenkette 2 abgewandten Ende des Spindelstocks 9 eine Spindelwelle 15 der Spindel 7 koaxial zur Spindeldrehachse und um diese in einer Lagerung 16 drehbar gelagert.

Eine kreisförmige Spindelscheibe 17 aus Stahl weist mittig eine durchgängige Öffnung auf. Durch diese Öffnung ist fest fixiert eine rohrförmigen Hülse 19 durchgesteckt, derart, dass die Achse der Hülse 19 senkrecht zur Scheibenebene verläuft und eine ihrer Stirnflächen etwa mit einer der Scheibenoberflächen abschließt. Der Innendurchmesser der Hülse 19 ist etwas größer als der Außendurchmesser der Spindelwelle 15. Im Inneren der Hülse 19 sind in einem Abstand zwei Pressringe 21 oben und unten angeordnet. Die Hülse 19 ist mit ihrem die Spindelscheibe 17 aufweisenden Ende dem Spindelstock 9 zugewandt auf die Spindelwelle 15 gesteckt. Mit den Pressringen 21 ist die Hülse 19 über eine Pressverbindung auf der Spindelwelle 15 befestigt. Die Spindelscheibe 17 ist auf diese Weise konzentrisch zur Spindeldrehachse und mit ihrer Scheibenebene senkrecht zur Spindeldrehachse angeordnet.

Ein dem Spindelstock 9 abgewandter, in Figuren 1 und 2 nicht sichtbare, Bereich der Spindelwelle 15 ist mit einer nicht dargestellten Gleichlaufeinrichtung entlang des Bewegungsweges geführt.

Ein nicht gezeigtes Fahrzeugrad ist konzentrisch oben auf der Spindelwelle 15 anordenbar.

Um die Spindelwellen 15 und damit die Fahrzeugräder zu drehen beziehungsweise eine Drehung derselben zu stoppen, weist die Fördereinrichtung 1 eine Vielzahl von identischen Elektromagneten 31a, 31b und 31c mit hufeisenförmigen Kernen 33 auf. Die Elektromagnete 31a, 31b und 31c sind einseitig, in Figur 1 links, äquidistant entlang der Endloslaschenkette 2 an einer nicht dargestellten, von der Endloslaschenkette 2 getrennten, Halteeinrichtung befestigt.

Die beiden Stirnflächen 41 an den Enden der Kerne 33 eines jeden Elektromagneten 31a, 31b, 31c verlaufen parallel, so dass zwischen ihnen ein Luftspalt 39 verbleibt. Die den Enden gegenüberliegenden Bereiche der Kerne 33 sind mit jeweils einer Spule 35 umfasst. Ist die jeweilige Spule 35 stromdurchflossen, so ist der Luftspalt 39 mit einem Magnetfeld durchflutet. Die Magnetfelder aller Elektromagnete 31a, 31b, 31c addieren sich zu einem resultierenden Magnetfeld 37, das sich entlang der Endloslaschenkette 2 erstreckt.

Die Elektromagnete 31a, 31b und 31c sind so orientiert, dass ihre zwischen den Schenkeln des Hufeisens liegenden Luftspalte 39 auf der der Endloslaschenkette 2 zugewandten Seite sind. Die Stirnflächen 41 der Kerne 33 verlaufen horizontal parallel zu den Spindelscheiben 17, wobei die Spindelscheiben 17 mit einem Teil ihrer radial außen liegenden Bereiche in die Luftspalte 39 mehrerer nebeneinander liegender Kerne 33 von Elektromagneten 31a, 31b, 31c eintauchen. Beim Transport der Spindeln 7 in Bewegungsrichtung 5 können die Spindelscheiben 17 die Luftspalte 39 aller in Richtung der Endloslaschenkette 2 betrachtet deckungsgleich hintereinander angeordneten Elektromagneten 31a, 31b und 31c berührungslos passieren, wobei sie insbesondere in den Bereichen der Luftspalte 39 dem dortigen Magnetfeld 37 ausgesetzt sind. Die Spindelscheiben 17 werden auf diese Weise mit ihrem Außenbereich berührungslos durch die Luftspalte 39 zwischen den beiden Stirnflächen 41 der hufeisenförmigen Kerne 33 geführt.

Jede Spindelscheibe 17 wird entlang des Bewegungsweges, außer beim Eintritt und beim Austritt in die beziehungsweise aus der Anordnung der Elektromagnete 31a, 31b und 31c, immer von wenigstens drei Elektromagneten 31a, 31b und 31c umgriffen; im Beispiel der Figur 1 sind es vier. Wenn die Spulen 35 der Elektromagnete 31a, 31b und 31c stromdurchflossen sind, durchdringt das von ihnen erzeugte Magnetfeld 37 dort die Spindelscheiben 17, wobei ihre Feldlinien im Wesentlichen parallel zu den Spindeldrehachsen verlaufen.

Die Elektromagnete 31a, 31b und 31c sind in drei Gruppen zueinander parallel liegender Elektromagnete verschaltet und wechselweise in gleich bleibender Reihenfolge entlang des Bewegungsweges angeordnet. Wechselweise bedeutet, dass in Bewegungsrichtung 5 einem Elektromagneten 31a der ersten Gruppe ein Elektromagnet 31b der zweiten Gruppe und diesem ein Elektromagnet 31c der dritten Gruppe und sodann wieder ein Elektromagnet 31a der ersten Gruppe folgt und so weiter. Jede Gruppe von Elektromagneten 31a, 31b und 31c ist jeweils über eine Versorgungsleitung 34a, 34b beziehungsweise 34c mit einer von drei Phasen einer Drehstromquelle 45, in Figur 1 links unten, verbunden. Sie werden so um jeweils 120° phasenverschoben mit Strom versorgt. Insgesamt wird aus den sich zeitlich ändernden Einzelmagnetfeldern der einzelnen Elektromagnete 31a, 31b und 31c ein sich räumlich entlang der Endloslaschenkette 2 änderndes resultierendes Magnetfeld 37 erzeugt, welches die Gestalt einer wandernden Welle hat.

Dieses sich entlang des Bewegungsweges ändernde, relativ zur Endloslaschenkette 2 wandernde, resultierende Magnetfeld 37 erzeugt in den Spindelscheiben 17 Wirbelströme, derart, dass eine Kraft quer zum Magnetfeld 37 und damit ein resultierendes Drehmoment auf die Spindelscheiben 17 wirkt und diese um die Spindeldrehachsen im Uhrzeigersinn in Richtung der Pfeile 47 gedreht werden. Durch eine entsprechende Änderung der Stromrichtung und/oder der Phasenverschiebung und der daraus resultierenden, auf die Spindelscheiben 17 wirkenden Drehmomente können die Drehungen der Spindelscheiben 17 gestoppt werden.

Im Übrigen läuft die Endloslaschenkette 2 kontinuierlich und bewegt die Spindeln 7 in Bewegungsrichtung 5 an den Elektromagneten 31a, 31b und 31c entlang, wobei, wie geschildert, ihre Spindelscheiben 17 in die Luftspalte 39 der Elektromagnete 31a, 31b und 31c hineinragen. Bei der Ansteuerung der Stromversorgung der Elektromagnete 31a, 31b und 31c wird die Fortbewegung der Spindeln 7 in einer Weise berücksichtigt, dass ein für die kontrollierte Drehung der Spindelscheiben 17 erforderliches Magnetfeld 17 erzielt wird. Die Drehgeschwindigkeit ist dabei eine Funktion der Frequenz der Erregerspannungen.

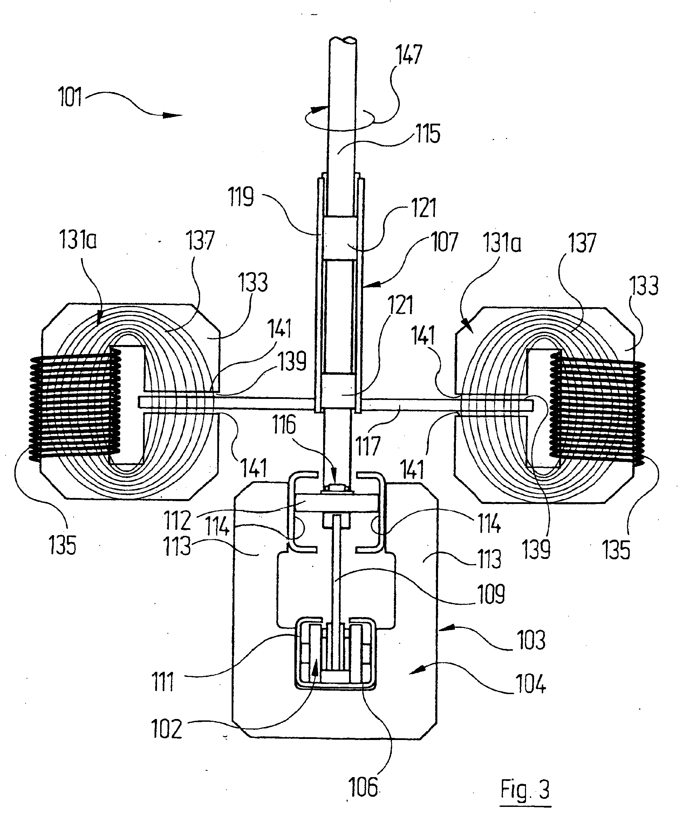

In Figur 3 ist ein zweites Ausführungsbeispiels einer dem ersten Ausführungsbeispiel aus Figuren 1 und 2 ähnlichen Fördereinrichtung 101 im Bereich einer der Spindeln 107 im vertikalen Teilschnitt gezeigt. Diejenigen Elemente, die zu denen des ersten Ausführungsbeispiels ähnlich sind, sind mit denselben Bezugszeichen zuzüglich 100 versehen, so dass bezüglich deren Beschreibung auf die Ausführungen zum ersten Ausführungsbeispiel Bezug genommen wird. Im Unterschied zum ersten Ausführungsbeispiel sind im zweiten Ausführungsbeispiel nicht einseitig sondern spiegelsymmetrisch beidseitig der Spindeln 107 Elektromagnete 131a mit hufeisenförmigen Kernen 133 angeordnet, wobei in Figur 3 lediglich zwei Elektromagnete 131a gezeigt sind. Die Elektromagnete 131a sind mit in Figur 3 nicht sichtbaren, den Elektromagneten 31b und 31c des ersten Ausführungsbeispiels in Figuren 1 und 2 entsprechenden Elektromagneten entsprechend dem ersten Ausführungsbeispiel so geschaltet, dass die durch sie hervorgerufenen Kräfte auf die Spindelscheiben 117 sich immer optimal zusammensetzen, so dass die gewünschte Wirkung, nämlich eine kontrollierte Drehung der Spindelscheiben 117, der Spindelwellen 115 und der darauf gelagerten Fahrzeugräder, beziehungsweise ein Halten derselben bewirkt wird.

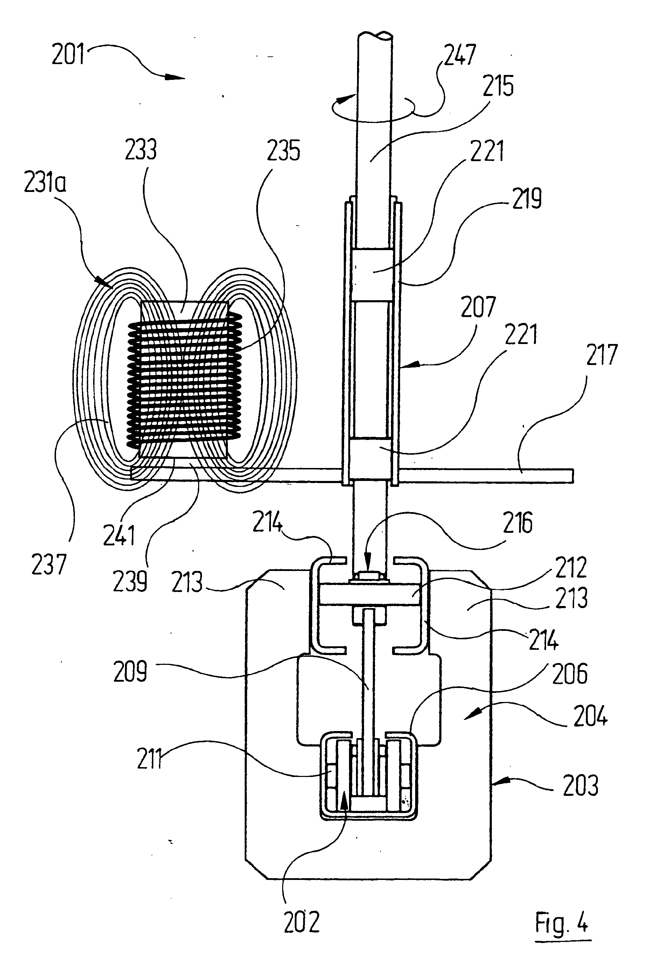

In Figur 4 ist ein drittes Ausführungsbeispiel einer der in Verbindung mit Figur 1 und Figur 2 beschriebenen Fördereinrichtung 1 ähnlichen Fördereinrichtung 201 im Bereich einer der Spindeln 207 im vertikalen Teilschnitt gezeigt. Diejenigen Elemente, die zu denen des ersten Ausführungsbeispiels ähnlich sind, sind mit denselben Bezugszeichen zuzüglich 200 versehen, so dass bezüglich deren Beschreibung auf die Ausführungen zum ersten Ausführungsbeispiel Bezug genommen wird. Im Unterschied zum ersten Ausführungsbeispiel haben die Elektromagnete 231a, von denen in Figur 4 lediglich ein Elektromagnet 231a gezeigt ist, keinen hufeisenförmigen, sondern einen geraden Kern 233. Die den Elektromagneten 31b und 31c des ersten Ausführungsbeispiels in Figuren 1 und 2 entsprechenden Elektromagnete sind in Figur 4 nicht gezeigt. Die Elektromagnete 231a befinden sich auf der der Endloslaschenkette 202 abgewandten Seite der Spindelscheibe 217. Die Achsen ihrer Kerne 233 verlaufen parallel zu den Spindeldrehachsen. Die Elektromagnete 231a sind so platziert, dass zwischen der Spindelscheibe 217 zugewandten Stirnflächen 241 ihrer Kerne 233 und den entsprechenden Oberflächen der Spindelscheiben 217 jeweils ein Luftspalt 239 verbleibt und die Spindelscheibe 217 und die Kerne 233 der Elektromagnete 231a einander nicht berühren. Die Magnetfelder 237 der Elektromagnete 231a, deren Spulen 235 stromdurchflossen sind, durchfluten auch hier entsprechend dem ersten Ausführungsbeispiel die Spindelscheiben 217 und bewirken entsprechende Drehmomente zum Drehen beziehungsweise Halten der Spindelwellen 215 mit den Spindelscheibe 217 und den dort gelagerten Fahrzeugrädern.

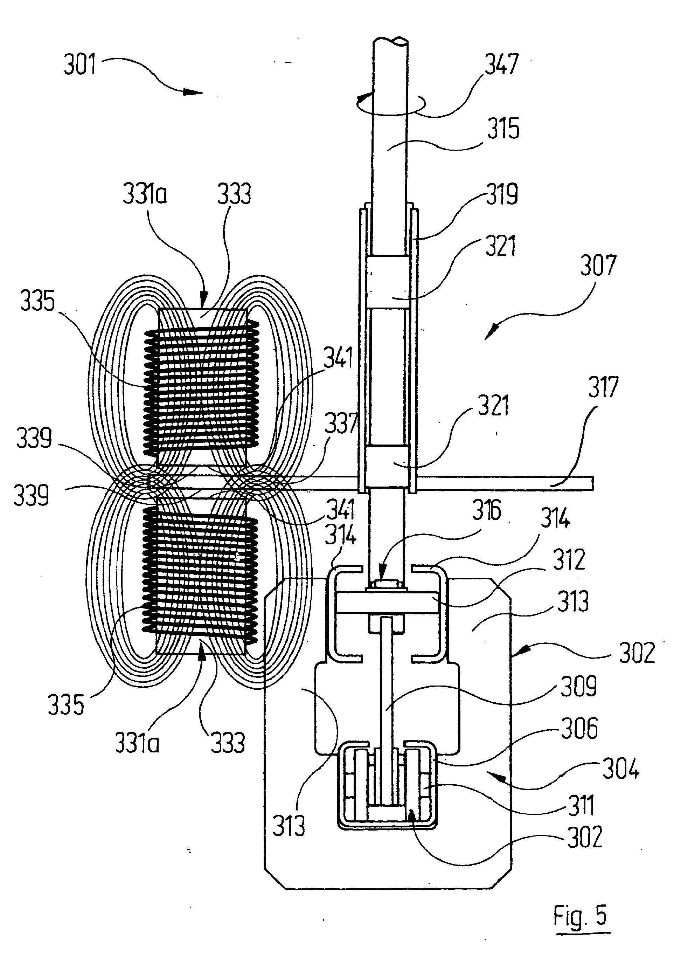

Bei einem vierten Ausführungsbeispiel, dargestellt in Figur 5, sind diejenigen Elemente die zu denen des dritten, in Figur 4 beschriebenen Ausführungsbeispiels ähnlich sind, mit denselben Bezugszeichen zuzüglich 100 versehen, so dass bezüglich deren Beschreibung auf die Ausführungen zum dritten Ausführungsbeispiel Bezug genommen wird. Dieses Ausführungsbeispiel unterscheidet sich von dem dritten Ausführungsbeispiel dadurch, dass zusätzlich zu den oberen Elektromagneten 331a auf der der Endloslaschenkette 302 abgewandten Seite der Spindelscheiben 317 eine im Wesentlichen symmetrische Anordnung von unteren Elektromagneten 331a auf der gegenüberliegenden, der Endloslaschenkette 302 zugewandten Seite der Spindelscheiben 317 vorgesehen ist. Jedem oberen Elektromagneten 331a ist hierbei ein unterer Elektromagnet paarweise zugeordnet, wobei die Achsen der Kerne 333 der paarweise zusammengehörigen Elektromagnete 331a koaxial verlaufen. Zwischen den jeweils der Spindelscheibe 317 zugewandten Stirnseiten 341 der Kerne 333 des oberen und unteren Elektromagneten 331a und der entsprechenden Oberfläche der Spindelscheibe 317 befindet sich jeweils ein Luftspalt 339, den die Umfangsbereiche der Spindelscheiben 317 beim Transport entlang des Bewegungsweges berührungslos passieren. Die einem Paar angehörenden gegenüberliegenden Elektromagnete 331a sind in Gruppen entsprechend dem ersten Ausführungsbeispiel aus Figuren 1 und 2 so geschaltet, dass die von ihnen erzeugten Einzelmagnetfelder sich zu dem resultierenden Magnetfeld 337 mit insbesondere im Bereich der Spindelscheiben 317 größeren Feldstärken zusammensetzen und so entsprechend größere Drehmomente auf die Spindelscheiben 317 und damit die Spindelwellen 315 und Fahrzeugräder wirken. Auf diese Weise können auch schwere Fahrzeugräder schnell gedreht werden.

Statt für Fahrzeugräder kann die Vorrichtung auch zur Behandlung von anderen Werkstücken eingesetzt werden. Auch ist ihr Einsatz nicht beschränkt auf Pulverlackierungen.

Anstelle der Elektromagnete 31a, 31b, 31c; 131a; 231a; 331a kann auch wenigstens ein anderes Mittel zur Erzeugung des Magnetfelds 37; 137; 237; 337, insbesondere eine Vielzahl von elektrischen Spulenelementen, vorgesehen sein.

Die Elektromagnete 31a, 31b, 31c; 131a; 231a; 331a können auch in anderer Weise angeordnet sein.

Die Elektromagnete 31a, 31b, 31c; 131a; 231a; 331a können statt in drei Gruppen untereinander verschaltet auch in andere Weise, auch in einer geringeren oder größeren Anzahl von Gruppen, geschaltet sein. Sie können beispielsweise auch separat geschaltet und mit einer Steuereinrichtung , insbesondere einem Frequenzumformer, entsprechend angesteuert sein.

Die Elektromagnete 31a, 31b, 31c; 131a; 231a; 331a können statt mit einer Drehstromquelle 45 auch mit einer anderen Quelle für veränderlichen Strom, beispielsweise einer Quelle für geregelten Gleichstrom, funktionell verbunden sein.

Durch entsprechende Bestromung der Spulen 35; 135; 235; 335 der Elektromagnete 31a, 31b, 31c; 131a; 231a; 331a können auch Drehrichtungswechsel und/oder Beschleunigungen der Drehbewegung durchgeführt werden. Die einzelnen Spindelscheiben 17; 117; 217; 317 mit den Spindelwellen 15; 115; 215; 315 können auch separat gedreht oder gehalten werden.

Die Spindelscheiben 17; 117; 217; 317 können statt aus Stahl auch aus einem anderen Metall, insbesondere aus Eisen, Aluminium oder Kupfer, sein. Sie können aber auch aus einem anderen elektrisch leitenden Material sein. Sie können auch nur wenigstens zu einem Teil aus diesem Material sein, beispielsweise können sie damit beschichtet sein oder einen Kern 33; 133; 233; 333 aus einem solchen Material besitzen.

Die Spindelscheiben 17; 117; 217; 317 können statt mit dem Pressverband auch in anderer Weise, insbesondere drehschlüssig, an beziehungsweise auf den Spindelwellen 15; 115; 215; 315 befestigt sein.

Die Endloslaschenkette 2; 102; 202; 302 kann statt kontinuierlich auch getaktet laufen.

Statt der Endloslaschenkette 2; 102; 202; 302 kann auch ein andersartiges bewegliches Teil eines Förderers, beispielsweise ein Endlosband, vorgesehen sein.

## Patentansprüche

1. Vorrichtung zur Behandlung von Werkstücken, insbesondere Fahrzeugrädern, insbesondere im Rahmen einer Pulverlackierung, mit einer Fördereinrichtung, welche die Werkstücke entlang eines Bewegungsweges durch die Vorrichtung führt, wobei die Fördereinrichtung einen Förderer umfasst und die Werkstücke auf spindelförmigen Elementen anordenbar sind, die an dem Förderer befestigt und um ihre eigene Achse drehbar sind,
**dadurch gekennzeichnet, dass**
die Fördereinrichtung (1; 101; 201; 301) wenigstens ein Mittel (31a, 31b, 31c; 131a; 231a; 331a) zur Erzeugung eines sich räumlich und/oder zeitlich ändernden Magnetfelds (37; 137; 237; 337) aufweist, welches eine Kraft zum Drehen oder Anhalten der spindelförmigen Elemente (15, 17, 19; 115;, 117, 119; 215, 217, 219; 315, 317, 319) bewirkt.

2. Vorrichtung nach einem der vorhergehenden Ansprüche, **dadurch gekennzeichnet, dass** das Magnetfeld (37; 137; 237; 337) die Form einer entlang des Bewegungsweges (5) wandernden Welle hat.

3. Vorrichtung nach einem der vorhergehenden Ansprüche, **dadurch gekennzeichnet, dass** das Mittel entlang des Bewegungsweges (5) eine Vielzahl von elektrischen Spulenelementen, insbesondere Elektromagneten (31a, 31b, 31c; 131a; 231a; 331a), zur Erzeugung des Magnetfelds (37; 137; 237; 337) aufweist.

4. Vorrichtung nach Anspruch 3, **dadurch gekennzeichnet, dass** die elektrischen Spulenelemente (31a, 31b, 31c; 131a; 231a; 331a) in wenigstens zwei Gruppen untereinander verschaltet und wechselweise entlang des Bewegungsweges angeordnet sind, wobei die elektrischen Spulenelemente (31a, 31b, 31c; 131a; 231a; 331a) gruppenweise mit elektrischen Wechselströmen beaufschlagt sind, die gegeneinander phasenverschoben sind.

5. Vorrichtung nach Anspruch 3 oder 4, **dadurch gekennzeichnet, dass** die elektrischen Spulenelemente (31a, 31b, 31c; 131a; 231a; 331a) äquidistant entlang des Förderers (3; 103; 203; 303) angeordnet sind.

6. Vorrichtung nach einem der Ansprüche 3 bis 5, **dadurch gekennzeichnet, dass** die elektrischen Spulenelemente (31a, 31b, 31c; 131a; 231a; 331a) ein- oder beidseitig des Förderers (3; 103; 203; 303) angeordnet sind.

7. Vorrichtung nach einem der vorhergehenden Ansprüche, **dadurch gekennzeichnet, dass** das Mittel zur Erzeugung des Magnetfelds mit einer Steuerungseinrichtung, insbesondere einem Frequenzumformer, steuerbar verbunden ist.

8. Vorrichtung nach einem der vorhergehenden Ansprüche, **dadurch gekennzeichnet, dass** das Mittel (31a, 31b, 31c; 131a; 231a; 331a) zur Erzeugung des Magnetfelds (37; 137; 237; 337) mit einer Drehstromquelle (45) oder einer Quelle für geregelten Gleichstrom funktionell verbunden ist.

9. Vorrichtung nach einem der vorhergehenden Ansprüche, **dadurch gekennzeichnet, dass** die spindelförmigen Elemente jeweils ein fest mit dem Förderer (3; 103; 203; 303) verbundenes Teil, insbesondere einen Spindelstock (9; 109; 209; 309), und ein um dieses drehbar gelagertes Teil, insbesondere eine Spindelwelle (15; 115; 215; 315), aufweisen.

10. Vorrichtung nach Anspruch 9, **dadurch gekennzeichnet, dass** das drehbar gelagerte Teil, insbesondere die Spindelwelle (15; 115; 215; 315), eine insbesondere kreisförmige Scheibe (Spindelscheibe) (17; 117; 217; 317), die wenigstens zu einem Teil aus einem elektrisch leitenden Material, insbesondere aus Metall, ist, auf weist, die drehschlüssig an dem drehbar gelagerten Teil (15; 115; 215; 315) befestigt ist.

11. Vorrichtung nach Anspruch 10, **dadurch gekennzeichnet, dass** die Spindelscheibe (17; 117; 217; 317) konzentrisch zur Spindeldrehachse und mit ihrer Scheibenebene senkrecht zur Spindeldrehachse angeordnet ist.

12. Vorrichtung nach einem der Ansprüche 10 oder 11, **dadurch gekennzeichnet, dass** das Mittel (31a, 31b, 31c; 131a; 231a; 331a) zur Erzeugung des Magnetfelds (37; 137; 237; 337), insbesondere die elektrischen Spulenelemente, ein- oder beidseitig der kreisförmigen Spindelscheiben (17; 117; 217; 317), angeordnet sind oder die Spindelscheiben (17; 117; 217; 317) hufeisenförmig umgreifen.

13. Vorrichtung nach einem der vorhergehenden Ansprüche, **dadurch gekennzeichnet, dass** der Förderer (3; 103; 203; 303) kontinuierlich oder getaktet läuft.

## Claims

1. Arrangement for treating workpieces, in particular vehicle wheels, especially in the context of a powder coating process, with a conveying device that guides the workpieces along a movement path through the arrangement, wherein the conveying device comprises a conveyor and the workpieces can be arranged on spindle-shaped elements that are secured to the conveyor and that can rotate about their own axis
**characterised in that**
the conveying device (1; 101; 201; 301) comprises at least one means (31a, 31b, 31c; 131a; 231a; 331a) for generating a spatially and/or temporally changing magnetic field (37; 137; 237; 337), which exerts a force to rotate or stop the spindle-shaped elements (15, 17, 19; 115;, 117, 119; 215, 217, 219; 315, 317, 319).

2. Arrangement according to one of the preceding claims, **characterised in that** the magnetic field (37; 137; 237; 337) has the shape of a wave traveling along the movement path (5).

3. Arrangement according to one of the preceding claims, **characterised in that** the means along the movement path (5) comprises a plurality of electrical coil elements, in particular electromagnets (31a, 31b, 31c; 131a; 231a; 331a) for generating the magnetic field (37; 137; 237; 337).

4. Arrangement according to claim 3, **characterised in that** the electrical coil elements (31a, 31b, 31c; 131a; 231a; 331a) are connected to one another in at least two groups and are arranged alternately along the movement path, the electrical coil elements (31a, 31b, 31c; 131a; 231a; 331a) being charged in groups with alternating electrical currents that are phase-shifted with respect to one another.

5. Arrangement according to claim 3 or 4, **characterised in that** the electrical coil elements (31a, 31b, 31c; 131a; 231a; 331a) are arranged equidistantly along the conveyor (3; 103; 203; 303).

6. Arrangement according to one of claims 3 to 5, **characterised in that** the electrical coil elements (31a, 31b, 31c; 131a; 231a; 331a) are arranged on one side or both sides of the conveyor (3; 103; 203; 303).

7. Arrangement according to one of the preceding claims, **characterised in that** the means for generating the magnetic field is controllably connected to a control device, in particular to a frequency converter.

8. Arrangement according to one of the preceding claims, **characterised in that** the means (31a, 31b, 31c; 131a; 231a; 331a) for generating the magnetic field (37; 137; 237; 337) is functionally connected to a three-phase current source (45) or to a source for regulated direct current.

9. Arrangement according to one of the preceding claims, **characterised in that** the spindle-shaped elements in each case comprise a part, in particular a spindle carrier (9; 109; 209; 309), securely connected to the conveyor (3; 103; 203; 303) and a part rotatably mounted thereon, in particular a spindle shaft (15; 115; 215; 315).

10. Arrangement according to claim 9, **characterised in that** the rotatably mounted part, in particular the spindle shaft (15; 115; 215; 315), comprises an in particular circular disc (spindle disc) (17; 117; 217; 317) that is formed at least in part of an electrically conducting material, in particular of metal, which is secured in a rotationally fixed manner to the rotatably mounted part (15; 115; 215; 315) .

11. Arrangement according to claim 10, **characterised in that** the spindle disc (17; 117; 217; 317) is arranged concentrically with respect to the axis of rotation of the spindle and with the plane of its disc perpendicular to the axis of rotation of the spindle.

12. Arrangement according to one of claims 10 and 11, **characterised in that** the means (31a, 31b, 31c; 131a; 231a; 331a) for generating the magnetic field (37; 137; 237; 337), in particular the electrical coil elements, are arranged on one or both sides of the circular spindle discs (17; 117; 217; 317), or surround the spindle discs (17; 117; 217; 317) in the manner of a horseshoe.

13. Arrangement according to one of the preceding claims, **characterised in that** the conveyor (3; 103; 203; 303) runs continuously or in a pulsed manner.

## Revendications

1. Dispositif pour le traitement de pièces, en particulier de roues de véhicules, en particulier dans le cadre d'un laquage par poudre, avec un équipement de transport qui conduit les pièces le long d'un chemin de déplacement à travers le dispositif, l'équipement de transport comprenant un convoyeur et les pièces pouvant être disposées sur des éléments en forme de broche qui sont fixés sur le convoyeur et peuvent tourner autour de leur axe,
**caractérisé en ce que**
l'équipement de transport (1 ; 101 ; 201 ; 301) présente au moins un moyen (31a, 31b, 31c ; 131a; 231a ; 331a) pour générer un champ magnétique (37; 137 ; 237; 337) variable dans l'espace et/ou dans le temps, lequel produit une force pour faire tourner ou arrêter les éléments en forme de broche (15, 17, 19 ; 115, 117, 119 ; 215, 217, 219 ; 315, 317,319).

2. Dispositif selon l'une des revendications précédentes, **caractérisé en ce que** le champ magnétique (37 ; 137 ; 237 ; 337) a la forme d'une onde se déplaçant le long du chemin de déplacement (5).

3. Dispositif selon l'une des revendications précédentes, **caractérisé en ce que** le moyen présente le long du chemin de déplacement (5) une pluralité d'éléments à bobine électrique, en particulier d'électroaimants (31a, 31b, 31c ; 131a ; 231a; 331a), pour générer le champ magnétique (37 ; 137 ; 237 ; 337).

4. Dispositif selon la revendication 3, **caractérisé en ce que** les éléments à bobine électrique (31a, 31b, 31c ; 131a ; 231a ; 331a) sont connectés entre eux en au moins deux groupes et disposés alternativement le long du chemin de déplacement, les éléments à bobine électrique (31a, 31b, 31c ; 131a; 231a; 331a) étant soumis par groupes à des courants électriques alternatifs qui sont déphasés l'un par rapport à l'autre.

5. Dispositif selon la revendication 3 ou 4, **caractérisé en ce que** les éléments à bobine électrique (31a, 31b, 31c ; 131a ; 231a ; 331a) sont disposés à équidistance le long du convoyeur (3 ; 103 ; 203 ; 303).

6. Dispositif selon l'une des revendications 3 à 5, **caractérisé en ce que** les éléments à bobine électrique (31a, 31b, 31c ; 131a ; 231a ; 331a) sont disposés d'un côté ou des deux côtés du convoyeur (3 ; 103 ; 203 ; 303).

7. Dispositif selon l'une des revendications précédentes, **caractérisé en ce que** le moyen de génération du champ magnétique est relié en asservissement à un équipement de commande, en particulier un variateur de fréquence.

8. Dispositif selon l'une des revendications précédentes, **caractérisé en ce que** le moyen (31a, 31b, 31c ; 131a ; 231a ; 331a) pour générer le champ magnétique (37 ; 137 ; 237 ; 337) est relié fonctionnellement à une source de courant triphasé (45) ou à une source de courant continu régulé.

9. Dispositif selon l'une des revendications précédentes, **caractérisé en ce que** les éléments en forme de broche présentent chacun une partie solidaire du convoyeur (3 ; 103 ; 203 ; 303), en particulier une poupée (9 ; 109 ; 209 ; 309), et une partie montée tournante autour de celle-ci, en particulier un arbre de broche (15 ; 115 ; 215 ; 315).

10. Dispositif selon la revendication 9, **caractérisé en ce que** la partie montée tournante, en particulier l'arbre de broche (15 ; 115 ; 215 ; 315), présente un disque en particulier circulaire (disque de broche) (17 ; 117 ; 217 ; 317), qui est au moins en partie constitué d'un matériau électriquement conducteur, en particulier en métal, et qui est fixé de manière solidaire en rotation à la partie montée tournante (15 ; 115 ; 215 ; 315).

11. Dispositif selon la revendication 10, **caractérisé en ce que** le disque de broche (17 ; 117 ; 217 ; 317) est disposé concentriquement à l'axe de rotation de la broche et avec son plan de disque perpendiculaire à l'axe de rotation de la broche.

12. Dispositif selon l'une des revendications 10 ou 11, **caractérisé en ce que** les moyens (31a, 31b, 31c ; 131a ; 231a ; 331a) pour générer le champ magnétique (37 ; 137 ; 237 ; 337), en particulier les éléments à bobine électrique, sont disposés d'un côté ou des deux côtés des disques de broche circulaires (17 ; 117 ; 217 ; 317) ou entourent les disques de broche (17 ; 117 ; 217 ; 317) à la manière d'un fer à cheval.

13. Dispositif selon l'une des revendications précédentes, **caractérisé en ce que** le convoyeur (3 ; 103 ; 203 ; 303) avance de manière continue ou cadencée.
